Europäisches Patentamt

(19) European Patent Office

Office européen des brevets

(11) Numéro de publication : **0 443 968 A1**

(12) # DEMANDE DE BREVET EUROPEEN

(21) Numéro de dépôt : **91420058.9**

(22) Date de dépôt : **20.02.91**

(51) Int. Cl.⁵ : **G01B 21/04, B25J 13/00, G05G 9/00, G01B 7/00**

(30) Priorité : **21.02.90 FR 9002459**

(43) Date de publication de la demande :
**28.08.91 Bulletin 91/35**

(84) Etats contractants désignés :
**AT BE CH DE ES FR GB IT LI LU NL SE**

(71) Demandeur : **REFERENZ LA METROLOGIE APPLIQUEE Société Anonyme dite :**
**8, rue Hermann Frenkel**
**F-69007 Lyon (Rhône) (FR)**
Demandeur : **Moreau, Joel**
**Chemin de la Croix Blanche, Soucieu En Jarrest**
**F-69510 Thurins (Rhône) (FR)**
Demandeur : **Boyer, Jean Claude**
**Les Ecureuils, 1, impasse des Soeurs**
**F-69100 Villeurbanne (Rhône) (FR)**

(72) Inventeur : **Moreau, Joel**
**Chemin de la Croix Blanche, Soucieu en Jarrest**
**F-69510 Thurins (Rhône) (FR)**
Inventeur : **Boyer, Jean-Claude**
**Les Ecureuils, 1, Impasse des Soeurs**
**F-69100 Villeurbanne (Rhône) (FR)**

(74) Mandataire : **Perrier, Jean-Pierre et al**
**Cabinet GERMAIN & MAUREAU 12 rue de la République**
**F-42000 St-Etienne (FR)**

(54) **Dispositif de commande manuelle des déplacements motorisés d'un organe de machine.**

(57)     Ce dispositif est du type comprenant, au moins, une tête de mesure électronique portée par une structure en plusieurs éléments aptes à se déplacer sur les trois axes X, Y et Z, des moyens d'entrainement avec avec un moteur électrique 12 à 14 avec variateur de vitesse, et des moyens de commande des circuits d'alimentation 12a à 14a des moteurs précités.

Selon l'invention, les moyens de commande manuelle comprennent au moins un ensemble de manipulation 20 fixé sur un élément de la structure et comportant un unique levier d'actionnement de moyens détectant les déplacements de ce levier et des capteurs 30 à 37 convertissant ces déplacements en tensions a, b, c et d, ces moyens de commande manuelle étant associés à des moyens traitant algébriquement les tensions a, b, cet d suivant les trois formules suivantes :

$(a+b+c+d)$, $(-a+b-c+d)$, $(-a-b+c+d)$ et délivrant, sur les circuits de commande 12a à 14a, trois tensions x2, y2 et z2 correspondantes, en valeur et sens, aux déplacements transmis au levier dans les trois directions X, Y, et Z.

EP 0 443 968 A1

FIG.11

## DISPOSITIF DE COMMANDE MANUELLE DES DEPLACEMENTS MOTORISES D'UN ORGANE DE MACHINE

L'invention est relative à un dispositif de commande manuelle des déplacements motorisés sur trois axes orthogonaux d'un organe de machine et plus particulièrement, mais non exclusivement, de la tête de mesure d'une machine de mesure tridimensionnelle.

On connaît actuellement trois types de machines de mesure tridimensionnelle, à savoir les machines à déplacement manuel, les machines à déplacements motorisés, et les machines à déplacements motorisés et à commande numérique.

Les machines manuelles ont l'avantage d'être très conviviales et commodes d'utilisation, puisque guidées par la main de l'opérateur. Par contre, elles sont lentes, car toutes utilisent le même procédé consistant, d'abord, à déplacer, rapidement et à la main, les différents éléments de la structure en effectuant ce qu'il est convenu d'appeler le mouvement d'approche, puis, après arrêt et blocage de chacun de ces éléments, à faire avancer chacun d'eux avec vis micrométrique jusqu'au contact de la tête de mesure avec la pièce à mesurer, ce qui correspond au mouvement de palpage.

Ce procédé permet d'obtenir des niveaux de précision de mesure très intéressants, ne serait-ce que parce que la machine est statique au moment du palpage.

Des opérateurs expérimentés utilisent ces machines à déplacement manuel en palpant à la volée, c'est à dire en faisant suivre le mouvement d'approche par le mouvement de palpage. Dans ces conditions, ils prennent le risque de détériorer la tête de mesure électronique dont le prix est très élevé et, surtout, de perdre le bénéfice de la précision de mesure puisqu'il faut tenir compte, dans ce dernier cas, des erreurs importantes liées aux défauts dynamiques de la structure mécanique de la machine. Ces défauts sont d'autant moins maîtrisables qu'ils dépendent essentiellement de la façon plus ou moins brutale avec laquelle l'opérateur manipule la machine.

Les machines motorisées, c'est à dire celles dans lesquelles les déplacements des élémemts de la structure sont effectués par des moteurs électriques avec variateur de vitesses, ont l'avantage d'être un peu plus rapides que les machines manuelles, grâce à l'utilisation du palpage à la volée, tout en gardant une bonne précision de mesure, puisque les efforts nécessaires au déplacement sont toujours appliqués de la même façon et qu'est possible un contrôle de la vitesse de défilement au moment du palpage. La commande des moteurs électriques provoquant les déplacements des éléments de la structure se fait à partir de deux leviers opto-électroniques, ou électro-mécaniques, affectés, l'un aux déplacements dans le plan horizontal et l'autre aux déplacements dans le plan vertical. La manipulation de ces deux leviers n'est pas instinctive, ce qui rend la manoeuvre malaisée et crée une contrainte psychologique détachant l'opérateur de sa mesure. Ainsi, bien souvent, les utilisateurs ne trouvent aucun intérêt à ce type de machines et passent directement de la machine manuelle à la machine à commande numérique, beaucoup plus onéreuse.

La demande de brevet européen 23864 décrit un dispositif de commande manuelle dans lequel l'organe motorisé est commandé par des signaux électriques délivrés par des capteurs détectant les déformations de lames déformables, en croix et sollicitées par un levier. En raison de leur structure, les lames déformables ont une raideur importante en flexion et une raideur encore plus importante en torsion, ce qui exige de prévoir des moyens onéreux et complexes pour supprimer l'action sur les capteurs des efforts parasites sur le levier de commande.

Cette raideur du dispositif s'oppose à son application sur une machine de mesure tridimensionnelle nécessitant des moyens de commande dont l'actionnement doit être souple, progressif et non brutal, pour ne pas avoir une influence directe sur l'organe motorisé, et, en conséquence, sur la précision de la mesure.

La présente invention a pour but de remédier à ces iconvénients en fournissant un dispositif de commande, en particulier pour machine de mesure tridimensionnelle à déplacements motorisés, permettant, à partir d'une action manuelle, instinctive et sans influence sur la précision de mesure, de commander les déplacements motorisés de la structure en contrôlant la vitesse de ces déplacements, entre une valeur nulle et la valeur maximale de la vitesse d'approche, c'est à dire en procurant une machine de mesure moins onéreuse que les machines à commande numérique, aussi conviviales que les machines à commande manuelle et donnant une bonne précision de mesure.

Selon l'invention, l'ensemble de manipulation comprend, d'une part, des moyens de maintien des extrémités de deux lames élastiques , présentant une grande flexibilité et une faible raideur en torsion, coplanaires, parallèles, espacées et reliées par une traverse rigide de laquelle fait saillie le levier d'actionnement, d'autre part, des capteurs fixés, de part et d'autre de la traverse, sur chacune des faces de chaque lame, en formant quatre paires de capteurs, et, de plus, des circuits de liaison électrique reliant les capteurs de chaque paire en les montant en parallèle sur deux des branches d'un pont de Wheatstone commun, respectivement A, B, C et D, tandis que le circuit de sortie de chaque pont de Wheatstone dans lequel circule une tension a, b, c, ou d est raccordé à des moyens traitant algébriquement les tensions a, b, c, et d suivant les trois formules suivantes :

1. (a+b+c+d),
2. (-a+b-c+d),
3. (-a-b+c+d),

et délivrant, sur les circuits de commande des trois moteurs électriques de déplacement de l'organe, trois tensions x2, y2 t z2 correspondantes, en valeur et sens, aux déplacements transmis au levier dans les trois directions X, Y et Z.

Pour déplacer les éléments de structure de la machine, il suffit de saisir manuellement le levier d'actionnement et de le déplacer, en sens et valeur, par rapport aux trois axes X, Y et Z, de la même façon que le ferait un opérateur voulant déplacer manuellement les éléments de la structure pour amener la tête de mesure au contact de la pièce à mesurer. Sous l'effet de cet actionnement, les capteurs associés aux moyens détectant les mouvements délivrent quatre tensions a, b, c et d qui sont traitées algébriquement pour fournir trois tensions de sortie dont la valeur et le sens, sont fonctions des mouvements désirés sur les trois axes X, Y, et Z. Ces trois tensions de sortie réagissent sur les boîtiers de commande des moteurs électriques avec variateur de vitesse qui assurent l'entraînement des éléments de la structure sur les trois axes.

Il apparaît que grâce à ce dispositif, par une action manuelle instinctive sur le seul levier d'actionnement, il est possible d'assister, parfaitement et avec précision, les déplacements de chacun des éléments de la structure.

Dans une forme d'exécution de l'invention, les moyens traitant les tensions a, b, c, d comprennent un convertisseur analogique-numérique, transformant chacun de ces tensions en signaux numériques, respectivement a1, b1, c1, d1, un calculateur traitant algébriquement les quatre signaux reçus suivant les trois formules suivantes :

1. (a1+b1+c1+d1),
2. (-a1+b1-c1+d1),
3. (-a1-b1+c1+d1),

et délivrant trois signaux numériques x1, y1, z1 correspondants, en valeur et signe, aux déplacements dans les trois directions X, Y, et Z transmis au levier, et un convertisseur numérique-analogique qui, transformant ces trois signaux en tensions x2, y2, et z2, est interposé entre la sortie du calculateur et les circuits de commande des moteurs électriques de déplacement de la structure.

Cet agencement, faisant appel à des moyens simples du commerce, facilite le traitement algébrique des signaux et garantit la vitesse et la précision de la mesure.

Dans une forme d'exécution, l'ensemble de manipulation est muni de butées coopérant avec les lames pour, au-delà d'un seuil de déformation, augmenter leur raideur et former un seuil sensitif à partir duquel les vitesses de déplacements des éléments passent d'une gamme de vitesse lente de palpage à une gamme de vitesse rapide d'approche.

Ainsi, en même temps qu'il manipule le levier, l'opérateur est prévenu, par la modification de la raideur des lames élastiques, du changement de régime de vitesses et peut ainsi réguler aisément ces vitesses de déplacement en fonction des besoins.

De même, la traverse rigide reliant les deux lames élastiques d'un ensemble de manipulation est solidaire de barrettes de butée, aptes, lors de la déformation des lames, à venir en contact contre des faces de butée opposées de cet ensemble pour limiter cette déformation et, corrélativement, la valeur de la tension transmise aux circuits de commande des moteurs électriques.

Par cette disposition, qui s'oppose à toute déformation des lames au-delà d'un certain seuil, l'opérateur ne risque pas de détériorer les lames, mais, surtout, ne peut pas commander les déplacements des éléments de la structure avec une vitesse supérieure à celle maximale, obtenue lorsque les lames ont une déformation limitée par ces moyens de butée.

D'autres caractéristiques et avantages ressortiront de la description qui suit en référence au dessin schématique annexé, représentant, à titre d'exemple non limitatif, une forme d'exécution de ce dispositif à commande manuelle pour machine de mesure tridimensionnelle à déplacements motorisés.

Figure 1 est une vue en perspective représentant schématiquement l'aspect général d'une forme d'exécution de cette machine,

Figure 2 est une vue partielle en perspective montrant, à échelle agrandie, les éléments essentiels d'une forme d'exécution du boîtier de commande,

Figure 3 est une vue en perspective avec coupe partielle montrant, à échelle agrandie, les éléments constitutifs du boîtier de commande,

Figures 4, 5 et 6 sont des vues schématiques de côté d'un boîtier de commande montrant les différents moyens de butée associés aux lames, lorsque celles-ci sont, respectivement, en position de repos, en position d'augmentation de leur raideur et en position de limitation de la vitesse,

Figure 7 est un graphique représentant la variation de raideur des lames en fonction de leur course de déformation,

Figures 8, 9 et 10 montrent quelques-unes des positions pouvant être prises par les lames lors de leur déformation par le levier,

Figure 11 est un schéma électrique simplifié du dispositif selon l'invention,

Figure 12 est vue partielle en perspective des lames flexibles de deux boîtiers inclus dans un même dispositif de commande,

Figures 13 et 14 à 16 sont des vues similaires aux figures 3 et 4 à 6, montrant une autre forme d'exécution du dispositif représenté à la figure 1.

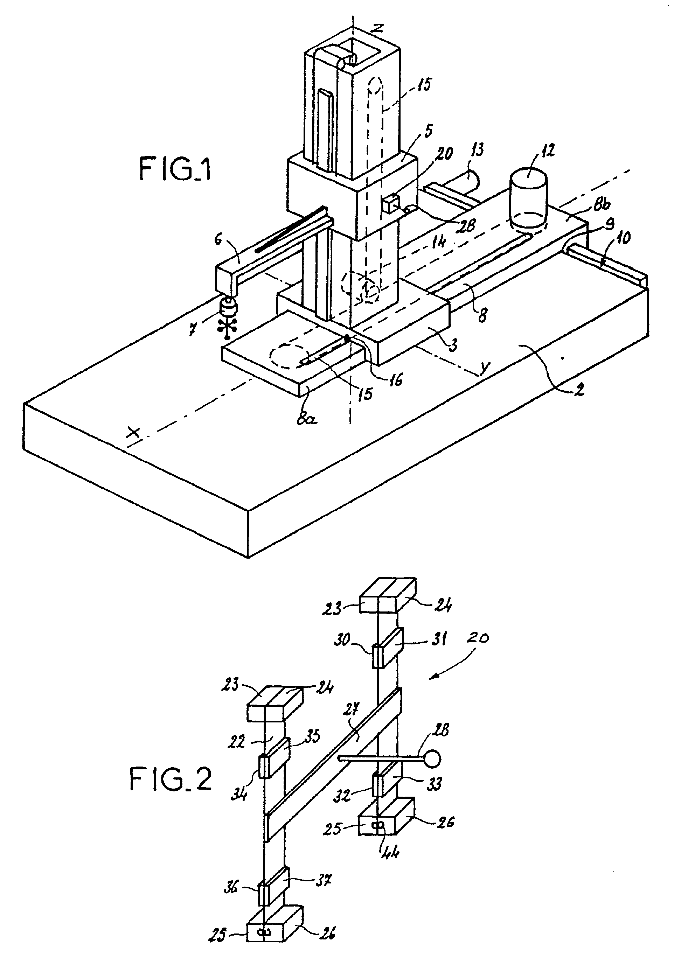

La machine de mesure, représentée à la figure 1, est composée d'un marbre 2 sur lequel repose, par un socle 3 de grandes dimensions, une colonne verticale 4. Sur cette colonne est monté coulissant un coulisseau 5 portant un bras horizontal de palpage 6 à l'extrémité libre duquel est montée la tête de mesure électronique 7. De façon connue, cette tête est reliée à des moyens de traitement et de correction des signaux électroniques qu'elle émet lorsqu'elle vient au contact de la pièce à mesurer, moyens reliés à un afficheur numérique indiquant les coordonnées dans trois directions perpendiculaires X, Y, Z du point à mesurer.

Le socle 3 est monté coulissant sur une règle longitudinale 8 dont une extrémité 8a est libre, tandis que son autre extrémité 8b est solidaire d'un coulisseau 9. Ce coulisseau est mobile transversalement dans une gorge 10 longeant l'un des bords du marbre 2. Comme le montre la figure 1, la colonne 4 est guidée dans ses déplacements longitudinaux, sur l'axe des X, par la réglette 8 et dans ses déplacements transversaux, sur l'axe des Y, par le coulisseau 9 et la glissière 10. Le montage du coulisseau sur la colonne 4 guide les déplacements verticaux, c'est à dire suivant l'axe des Z. Les éléments 3, 4, 5, 8, 9 et 10 de la structure de la machine assurent, de façon connue, un guidage précis de ces déplacements. Ils peuvent être aidés dans ces déplacements au moyen de paliers pneumatiques ou par tous autres moyens.

Bien que cette structure de machine soit particulièrement intéressante, il est bien évident que l'invention s'applique à des machines de mesure ayant une autre structure et, par exemple, du type à portique mobile, à portique fixe avec table mobile axialement, du type à pont mobile, du type à potence ou à poutre mobile en porte-à-faux et du type à montant et bras mobile. De même, il s'applique à tout autre organe motorisé de machine.

Quelle que soit la structure de la machine, il est indispensable que les déplacements de ces éléments soient motorisés, c'est à dire effectués par l'intermédiaire de moteurs électriques 12, 13 et 14 à vitesse variable et sens de rotation réglable.

Dans la présente machine, chaque moteur est relié à l'élément correspondant, à savoir le socle 3 pour le moteur 12, le coulisseau 9 pour le moteur 13 et le coulisseau 5 pour le moteur 14, par des moyens de transmission comprenant, un ruban 15, lié en 16 à l'élément entraîné, et formant une boucle entre une poulie calée sur l'arbre du moteur correspondant et une poulie de renvoi.

Tous ces dispositifs sont bien connus de l'état de la technique et il n'est donc pas nécessaire d'en fournir une description plus détaillée.

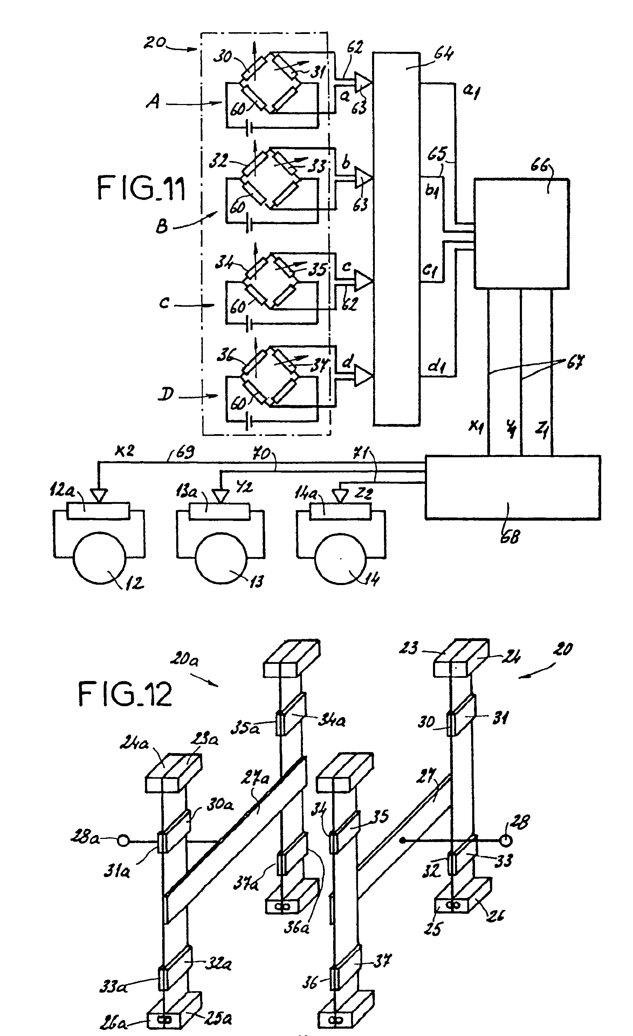

Selon l'invention, le dispositif de commande régissant les déplacements motorisés de la machine et intervenant, de façon connue, sur les circuits d'alimentation 12a, 13a et 14a des moteurs électriques 12, 13 et 14, comme montré à la figure 11, comprend divers moyens dont, au moins un ensemble de manipulation 20 fixé sur l'un des éléments de la machine.

Dans la forme d'exécution représentée à la figure 1, l'ensemble de manipulation 20, qui est unique, est disposé latéralement sur le flanc du coulisseau 5 mobile verticalement.

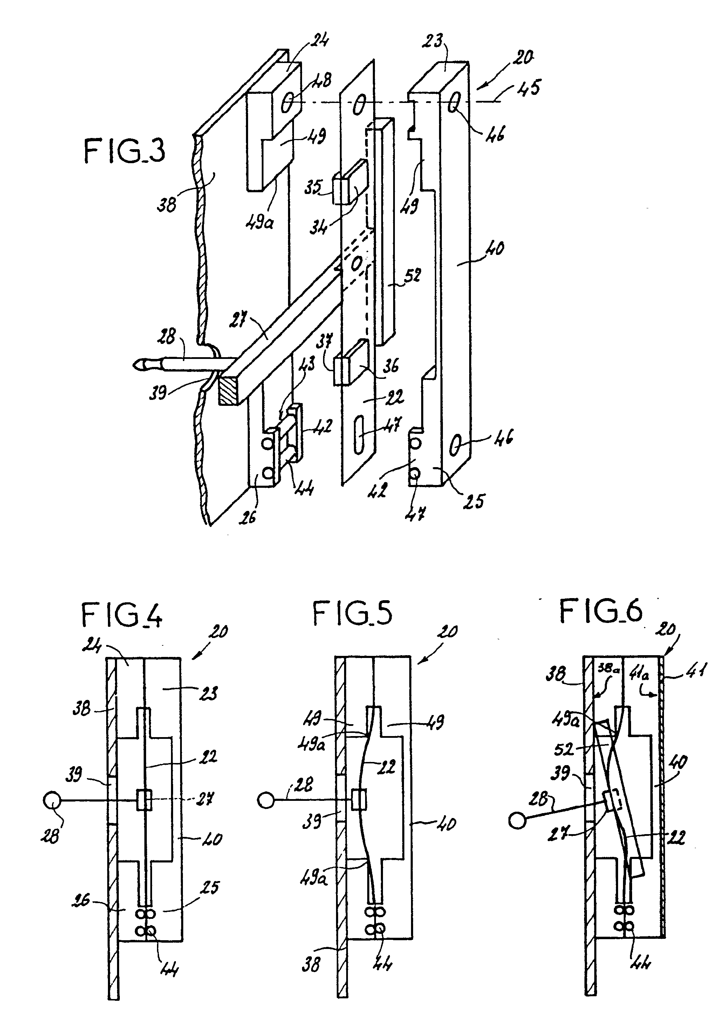

Dans une forme d'exécution de cet ensemble et comme le montrent schématiquement les figures 2 et 3, l'ensemble 20 sert à la fixation de deux lames élastiques 21 et 22, réalisées par exemple en acier à ressort. Les extrénmités de ces deux lames sont encastrées entre deux paires de mâchoires, à savoir une paire de mâchoires supérieures 23 et 24 assurant un encastrement serré et une paire de mâchoires inférieures 25 et 26 assurant un encastrememt glissant, c'est à dire procurant un degré de liberté pour laisser les lames se déformer, et en l'occurence tolérant les mouvements longitudinaux de la lame par rapport à elles.

Comme le montre plus en détails la figure 2, les grandes faces des lames 21 et 22 sont disposées dans un même plan, qui est ici vertical, avec leurs axes longitudinaux parallèles et leurs bords internes espacés. Les deux lames sont reliées, sensiblement à mi-longueur, par une traverse rigide 27 qui est solidaire d'un levier d'actionnement 28 saillant perpendiculairement de l'une de ses faces. Chaque lame est munie, de part et d'autre de la traverse 27 et sur chacune de ces faces, de capteurs d'efforts. Ceux-ci sont répartis en quatre paires à savoir, pour la lame 21, une paire supérieure 30-31 et une paire inférieure 32-33, et pour la lame 22, une paire supérieure 34-35 et une paire inférieure 36-37. Les capteurs d'efforts peuvent être constitués par des jauges d'extensométrie ou par tous autres moyens équivalents aptes à transformer un effort en tension ou en signaux électriques pouvant être traités.

La figure 3 montre une forme d'exécution plus précise du boîtier 20 qui, pour la facilité de la représentation, est vue par l'arrière, c'est à dire est représentée après retournement de 180° par rapport à ses représentations aux figures 1 et 2, et ne montre que la lame 22. Cette figure montre que les mâchoires antérieures 24 et 26 sont fixées sur une plaque 38 constituant la paroi avant de l'ensemble 20 et comportant dans sa partie centrale une ouverture 39 pour le passage et le débattement du levier 28. Quant aux mâchoires postérieures, 23 et 25, elles sont reliées l'une à l'autre par une âme 40. Les mâchoires inférieures 25 et 26, qui sont destinées à permettre l'encastrement avec glissement de l'extrémité inférieure de la lame 22, comportent deux nervures longitudinales de bordure 42 délimitant entre elles une gorge 43. Cette gorge sert de logement à deux patins transversaux 44, réalisés en matériau à faible coefficient de frottement. Les extrémités de ces patins sont engagées dans des logements appropriés réalisés dans les nervures de bordure 42. Il est évident que les patins 44 sont positionnés de manière à être en avant par rapport aux faces des nervures 42 pour venir, les premiers, en contact avec l'extrémité inférieure de la lame.

Les mâchoires et lames sont liées les unes aux autres par des vis transversales, représentées schématiquement par le trait mixte 45, traversant librememt des alésages appropriés 46 des mâchoires postérieures et des alésages 47, ménagés aux extrémités de la lame, et se vissant dans les trous taraudés 48 réalisés dans les mâchoires antérieures.

La figure 3 met bien en évidence que l'alésage 47 inférieur de la lame est oblong pour donner à cette lame une liberté de mouvement longitudinal.

Avantageusement, chaque mâchoire est prolongée, en direction de la mâchoire disposée du même côté qu'elle et dans sa partie venant en dessous de la lame par un redan, désigné de façon générale par 49, dont la fonction sera précisée plus loin.

La liaison entre chaque lame 21 et 22 et l'extrémité corespondante de la traverse 27 est assurée par une vis 50. La figure 3 montre que la traverse 27 est solidaire, à chacune de ses extrémités et hors de la lame correspondante, d'une barrette verticale 52 constituant moyens de butée.

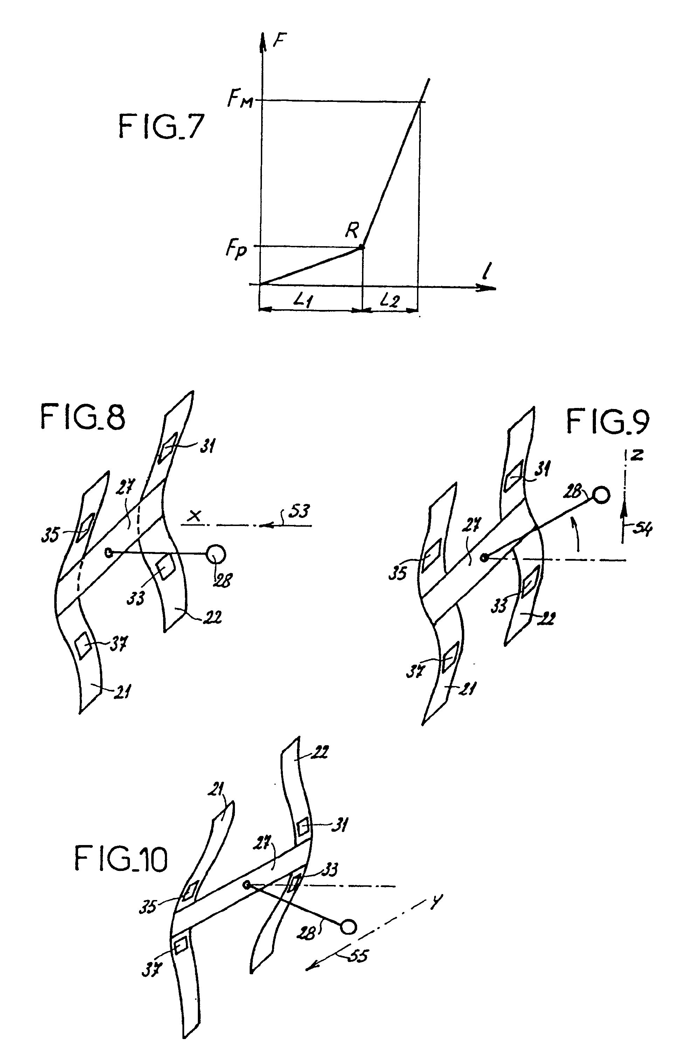

Au repos, et comme le montre la figure 4, les lames élastiques 21 et 22 sont disposées dans un même plan. Toute sollicitation sur le levier 28 se transmet aux deux lames flexibles qui, comme le montrent les figures 8, 9 et 10, se déforment différemment selon la direction et le sens des efforts appliqués par l'opérateur sur l'extrémité du levier 28. Ainsi, à la figure 8, correspondant à une volonté de l'opérateur de déplacer la tête de lecture 7 uniquement sur l'axe des Y dans le sens de la flèche 53, les deux lames 21 et 22 sont cintrées symétriquement, avec leur convexité tournée vers l'avant du mouvement voulu. A la figure 9, correspondant à la volonté de faire monter le coulisseau 5 vers le haut, sur l'axe des Z et dons le sens de la flèche 54, le déplacement de l'extrémité du levier 28 provoque une rotation de ce levier qui, par la traverse 27, donne aux deux lames 21 et 22 une forme en S, tandis qu'à la figure 10, correspondant à une volonté de déplacer la colonne 4 sur la réglette 8, sur l'axe des X et dans le sens de la flèche 55, le levier pivote et provoque, par la traverse 27, un cambrage en sens inverse des deux lames 21 et 22. On conçoit que la combinaison des trois mouvements donne des cambrures différentes aux lames 21 et 22, cambrures qui sont traduites, par les capteurs d'efforts, en tensions de valeur et de sens différents.

Il faut ici noter que l'actionnement du levier, dans le sens du ou des déplacements voulus procure un pilotage instinctif, ne perturbant pas l'opérateur qui peut ainsi concentrer son attention sur le déplacement réel de la tête de mesure 7 et le contrôler parfaitement. Cet avantage est très important car il permet les déplacements à la volée sans risques pour la tête 7.

La figure 11 montre les autres moyens du dispositif de commande selon l'invention qui permettent d'utiliser ces tensions pour provoquer les déplacements des éléments de la structure de la machine. Sur cette figure, où les références 30 à 37 représentent les capteurs d'effort, il apparaît que les capteurs de chaque paire de capteurs sont disposés en parallèle sur deux des branches d'un pont de Wheatstone désignés par la référence A, B, C ou D. Les deux autres branches de chacun des ponts sont munies de résistances ayant une valeur fixe et désignées de façon générale par 60.

De façon connue, un amplificateur 63 est disposé sur le circuit de sortie 62 de chacun des ponts. Les quatre amplificateurs 63, délivrant des tensions de valeur a, b, c et d, sont raccordés à un convertisseur analogique-numérique 64 transformant les tensions a, b, c et d en quatre signaux a1, b1, c1 et d1. Ceux-ci sont conduits par des voies de liaison 65 à un calculateur 66. Le calculateur est lui-même raccordé par trois voies 67 à un convertisseur numérique-analogique 68, duquel partent des liaisons 69, 70 et 71 aboutissant aux circuits de commande 12a, 13a et 14 des moteurs électriques assurant les déplacements de la structure sur les axes X, Y et Z.

Lorsque l'opérateur sollicite le levier 28 pour provoquer le déplacement asservi de la structure de la machine, les tensions a, b, c, d, délivrées par les ponts A, B, C, D sont amplifiées, puis transformées en signaux numériques a1, b1, c1 et d1 qui sont ensuite traités par le calculateur 66. Celui-ci effectue un traitement algébrique suivant les trois formules suivantes :

1. $(a1+b1+c1+d1)$,
2. $(-a1+b1-c1+d1)$,
3. $(-a1-b1+c1+d1)$.

En d'autres termes, le calculateur transforme les signaux a1, b1, c1 et d1 de valeur et signe définis par les capteurs et provenant des ponts A et D en signaux x1, y1 et z1, de signe et valeur définis sur les trois axes X, Y, et Z, selon la volonté de déplacement de la structure sur ces trois axes affichée par l'opérateur sur le levier 28. Les signaux de valeur x1, y1, et z1 sont convertis par le convertisseur 68 en tensions x2, y2, et z2 directement exploitables pan les circuits de commande 12a à 14a des moteurs électriques 12 à 14. De ce fait, chacun des moteurs électriques adopte un sens de rotation et une vitesse en rapport avec la position donnée par l'opérateur au levier 28.

Durant la manipulation du levier, et grâce à la disposition des lames, les efforts parasites fournis par la main de l'opérateur, et par exemple, des mouvements de torsion, ont peu d'influence sur les moyens de commande eux-mêmes, ce qui garantit la constance des résultats recherchés.

Le dimensionnement du levier et son accessibilité sont prévus pour que le pilotage se fasse du bout des doigts.

En outre, les lames élastiques sont choisies de manière que de faibles efforts sur le levier, et par exemple, de quelques Newtons à dix Newtons, soient suffisants pour actionner les moyens de commande d'asservissement et, par là même, obtenir les déplacements de la structure, suivant des vitesses allant de quelques millimètres par seconde jusqu'à des vitesses maximales de cent cinquante millimètres par seconde.

Pour faciliter le contrôle de la vitesse et comme le montre la figure 5, lorsque les lames 21 ou 22 atteignent une certaine déformation, elles viennent, en contact avec l'arête 49a du redan 49 qui modifie leur raideur. Cette augmentation de la raideur, qui avertit sensitivement l'opérateur du passage d'un seuil, entraîne une augmentation de la contrainte perçue par les capteurs sollicités et déclenche, par le dispositif de commande selon l'invention, le passage de la vitesse lente de palpage à la vitesse rapide d'approche, ou inversement.

Le seuil sensitif informe l'opérateur du passage aux vitesses rapides et constitue donc un moyen d'auto-contrôle permettant à l'opérateur de maîtriser les plages de vitesses et, dans la phase de palpage, de rester en vitesse lente, ce qui élimine les effets dynamiques consécutifs aux déplacements rapides et garantit l'obtention de la précision de mesure recherchée.

La figure 7 montre que, pour une course L1, comprise entre zéro et deux millimètres, la force Fp d'actionnement sur le levier va de zéro à une valeur de l'ordre de deux à trois Newtons, ce qui corespond à une vitesse de palpage Vp variant de la valeur zéro à une valeur de l'ordre de huit millimètres par seconde, et qu'après passage du point R, correspondant à l'augmentation de raideur des lames 21 et 22, une course L2 de plus faible valeur, et par exemple de l'ordre de un millimètre et demi, nécessite un effort plus important allant de Fp jusqu'à la valeur Fm de l'ordre de dix à quinze Newtons. Dans cette phase, le dispositif procure un accroissement de la vitesse de déplacement pouvant aller jusqu'à, par exemple, cent cinquante millimètres par seconde, qui est alors la vitesse d'approche maximale.

La limitation de la vitesse maximale, mais aussi la protection des lames contre une trop grande déformation pouvant modifier leurs caractéristiques, est assurée très simplement, comme le montre la figure 6, par butée de l'une ou l'autre des extrémités de chacune des barrettes 52 contre des faces opposées du boîtier 20, à savoir celle 38a de la plaque 38 dans un sens et celle 41a d'un capot 41 dans l'autre sens.

Il ressort de ce qui précède que la combinaison de l'ensemble de manipulation 20, incluant, ses lames élastiques 21 et 22 et ses paires de capteurs d'effort, avec le montage particulier des ponts de Wheatstone A à D, avec les moyens de traitement conprenant le convertisseur 64, le calculateur 66 et le convertisseur 68 et avec les trois formules de traitement, permet d'obtenir un disposif de commande procurant des déplacements instinctifs régulés en vitesse, de direction et sens parfaitement déterminés et pouvant permettre des mesures à la volée, sans que la structure de la machine n'en soit affectée, tout en obtenant la précision recherchée.

Par ailleurs, la souplesse du dispositif permet de piloter le déplacememt de la machine avec des efforts très faibles qui ne peuvent en aucun cas influer sur la mesure.

L'ensemble de manipulation qui a été décrit comme étant unique dans la forme d'exécution précédente peut aussi être utilisé avec un ensemble identique 20a disposé, par exemple, de l'autre côté du coulisseau 5. Cette forme d'exécution est montrée à la figure 12, où les éléments du nouvel ensemble de manipulation portent les mêmes numéros de références que ceux identiques de l'ensemble 20, mais sont affectés de la lettre a. La seule différence réside dans le montage des ponts A à D, puisque les paires de capteurs de l'ensemble 20a sont substituées aux résistances fixes 60 apparaissant sur la figure 11. Dans ce montage à deux ensembles 20-20a, les paires de capteurs constituant chaque pont sont choisies de manière à être celles qui occupent, dans les deux boîtiers, des positions spaciales opposées, tant verticalement que transversalement. En d'autres termes, le pont A comprenant les paires de capteurs 30-31 comprend aussi les paires de capteurs 33a-32a (figure 12), tandis que le pont B comprend les paires de capteurs 32-33 et 31a-30a, celui C comprend les paires de capteurs 34, 35 et 37a-36a, et celui D les paires de capteurs 36-37 et 35a-34a. Exceptée cette différence de montage, les autres moyens du dispositif de commande sont absolument identiques à ceux de la forme d'exécution précédente, fonctionnent de la même façon et procurent les mêmes résultats.

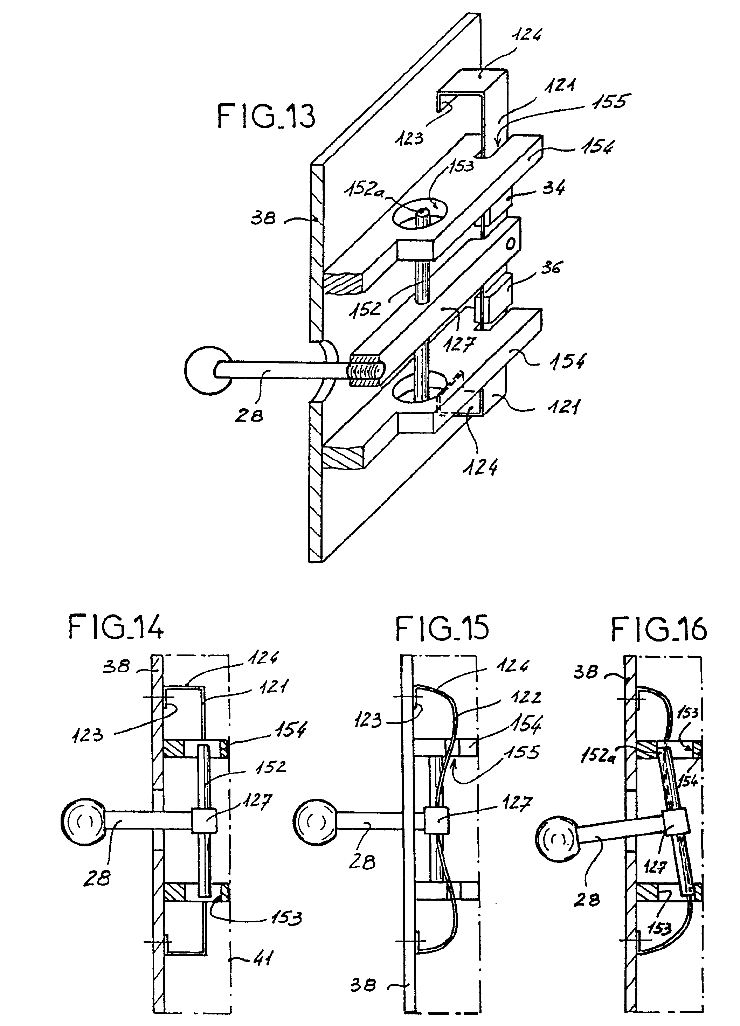

Les figures 13 à 16 représentent une forme d'exécution de l'ensemble de manipulation dans laquelle les deux lames élastiques 121-122 sont liées à la plaque 38, directement par leurs extrémités coudées et contrecoudées. Chaque lame forme ainsi un U partiellement fermé dont les retours 123 servent à la fixation, au moyen de vis ou autre, et dont les ailes 124 procurent, par leur souplesse, le degré de liberté longitudinal tolérant les déformations du corps de la lame 121 ou 122. Cela permet de supprimer les mâchoires contre-mâchoires et patins de l'ensemble représenté à la figure 3, et simplifie donc le dispositif, tout en permettant d'obtenir les mêmes déformations, comme le montrent les figures 14 à 16.

Dans cette forme d'exécution, les lames, portant les capteurs 30 à 37, sont fixées aux extrémités de la traverse rigide 127 qui est solidaire de deux barrettes 152. Celles-ci sont disposées entre le point d'ancrage du levier 28 et les extrémités de la traverse. Leurs extrémités 152a sont disposées à l'intérieur d'alésages 153 qui, de plus grand diamètre que le leur, constituent faces de butée, comme le montre la figure 16, et limitent les mouvements du levier 28, donc la déformation des lames. Les alésages 153 sont réalisés dans des parois transversales 154 solidaires de la plaque 38 et perpendiculaires à elle et à la direction des lames 121, 122.

Chaque paroi 154 comporte à chaque extrémité une rainure 155, lui donnant la forme d'une fourche et constituant passage pour le corps de lame correspondante. Comme le montre la figure 15, les bords en vis à vis de la rainure 155, remplacent les arêtes 49a des redans 49 de la forme d'exécution précédente, c'est à dire cosntituent moyens de butée augmentant la raideur des lames pour former le seuil sensitif lors du passage de la petite vitesse à la grande vitesse.

Il ressort de ce qui précède que cet ensemble de manipulation est beaucoup plus simple que le précédent, tout en procurant les mêmes fonctions et résultats.

Bien entendu, l'ensemble de manipulation 20 peut être disposé sur tout autre élément de la structure de la machine de mesure et voire même sur le bâti, ou sur un élément ou structure de toute autre machine.

Enfin, les lames élastiques peuvent être associées à tous autres capteurs d'efforts ou de mouvements, tels que capteurs inductifs ou capacitifs, ou être remplacées par tous autres moyens convertissant des déplacements en tensions électriques, sans que l'on sorte de l'invention, pourvu que les tensions délivrées par l'ensemble de manipulation 20 soient traitées algébriquement et procurent, sur les circuits de commande des moteurs 12 à 14, des tensions correspondantes, en valeur et sens, aux déplacements transmis au levier dans les trois directions X, Y et Z.

## Revendications

1. Dispositif de commande manuelle des déplacements motorisés sur trois axes orthogonaux d'un organe de machine, du type composé d'un ensemble de manipulation (20) avec des lames déformables qui, liées à un support de la machine et à un levier (28) d'actionnement, sont solidaires de capteurs convertissant leurs déformations en tensions électriques, et de moyens traitant ces tensions et réagissant sur les circuits de commande des moteurs déplaçant l'organe sur les trois axes, caractérisé en ce que l'ensemble de manipulation (20) comprend, d'une part, des moyens de maintien des extrémités de deux lames élastiques (21-22, 121-122), présentant une grande flexibilité et une faible raideur en torsion, espacées et reliées par une traverse rigide (27, 127) de laquelle fait saillie le levier d'actionnement (28), d'autre part, des capteurs (30 à 37) fixés, de part et d'autre de la traverse (27, 127), sur chacune des faces de chaque lame (21-22, 121-122), en formant quatre paires de capteurs, et, de plus, des circuits de liaison électrique reliant les capteurs de chaque paire en les montant en parallèles sur deux des branches d'un pont de Wheastone commun, respectivement A, B, C et D, tandis que le cricuit de sortie (62) de chaque pont de Wheastone, dans lequel circule une tension a, b, c ou d, est raccordé à des moyens (66) traitant algébriquement les tensions a, b, cet d suivant les trois formules suivantes :

    1. $(a+b+c+d)$,
    2. $(-a+b-c+d)$,
    3. $(-a-b+c+d)$,

et délivrant, sur les circuits de commande des trois moteurs électriques (12 à 14) de déplacement de l'organe, trois tensions $x2$, $y2$ et $z2$ correspondantes, en valeur et sens, aux déplacements transmis au levier dans les trois directions X, Y et Z.

2. Dispositif selon la revendication 1, caractérisé en ce que les moyens traitant les tensions a, b, c et d comprennent un convertisseur analogique-numérique (64) transformant chacune de ces tensions en signaux numériques respectivement $a1$, $b1$, $c1$ et $d1$, un calculateur traitant algébriquement ces quatre signaux suivant les trois formules suivantes :

    1. $(a1+b1+c1+d1)$,
    2. $(-a1+b1-c1+d1)$,
    3. $(-a1-b1+c1+d1)$,

et délivrant trois signaux numériques $x1$, $y1$ et $z1$ correspondants, en valeur et sens, aux déplacements transmis au levier 28 dans les trois directions X, Y et Z, et un convertisseur numérique-analogique (68) qui, transformant ces trois signaux en tensions $x2$, $y2$ et $z2$, est interposé entre la sortie du calculateur (66) et les circuits de commande (12a à 14a) des moteurs électriques (12 à 14) de déplacement de la structure.

3. Dispositif selon l'une quelconque des revendications 1 et 2, caractérisé en ce qu'il comporte deux ensembles de manipulation (20 et 20a) disposés de part et d'autre de l'un des éléments de sa structure, et dont les huit paires de capteurs d'efforts (30 à 37 et 30 à 37a) sont alimentées à travers quatre ponts de Wheatstone A à D, ponts sur lesquels ces paires sont disposées de manière que, d'une part, les capteurs de chaque paire soient en parallèle sur deux des branches du pont et que, d'autre part, les deux paires de capteurs (30-31 et 32a-33a), affectées à chaque pont A à D, correspondent aux deux ensembles de manipulation 20 et 20a et aient, sur les lames (21-22 et 21a-22)a de ces deux ensembles de manipulation, des positions spaciales opposées verticalement et transversalement.

4. Dispositif selon l'une quelconque des revendications 1 à 3, caractérisé en ce que chacune des lames élastiques (21-22) est fixée dans son ensemble de manipulation (20) avec encastrement de ses extrémités au moyen de mâchoires (23-24 et 25-26), et de manière qu'au moins l'une des extrémités encastrées de chaque lame flexible (21-22) possède un degré de liberté tolérant la flexion de cette lame.

5. Dispositif selon la revendication 4, caractérisé en ce que le degré de liberté de chaque lame est procuré par le montage coulissant de l'une de ses extrémités entre les deux mâchoires (25 et 26) qui prennent chacune appui sur cette extrémité par au moins un patin (44), réalisé en matériau à faible coefficient de frottement, patin disposé transversalement dans une gorge longitudinale (43) de chaque mâchoire.

6. Dispositif selon l'une quelconque des revendications 1 à 5, caractérisé en ce que l'ensemble de manipulation est muni de butées (49, 155) coopérant avec les lames (21-22, 121-122) pour, au-delà d'un seuil de déformation, augmenter leur raideur et former un seuil sensitif à partir duquel les vitesses de déplacement des éléments de la structure passent d'une gamme de vitesse lente de palpage à une gamme de vitesse rapide d'approche.

7. Dispositif selon la revendication 6 caractérisé en ce que chaque mâchoire (23 à 26) est prolongée, sur son côté venant en dessous de la lame (21 et 22), par un redan (49) de moindre hauteur qu'elle et dont l'arête (49a) constitue butée d'augmentation de raideur de la lame.

8. Dispositif selon l'une quelconque des revendications 1 à 7, caractérisé en ce que la traverse rigide (27, 127) reliant les deux lames élastiques (21-22, 121-122) d'un ensemble de manipulation (20) est solidaire de barrettes de butée (52, 152) aptes, lors de la déformation des lames, à venir en contact contre des faces de butées opposées(38a, 41a, 153) de cet ensemble (20), pour limiter cette déformation.

9. Dispositif selon l'ensemble des revendications 1 à 3, 6 et 8, caractérisé en ce que chaque lame élastique (121) est munie à ses extrémités d'une aile coudée (124), lui donnant un degré de liberté en translation longitudinale et tolérant sa flexion, et dans le prolongement de cette aile, d'un retour contrecoudé (123) pour sa fixation sur la plaque support (38).

10. Dispositif selon la revendication 9, caractérisé en ce que les faces de butées (153), coopérant avec les barrettes (152) pour limiter les déplacements des lames (151-152), sont constitués par les faces internes de deux alésages ménagés dans des parois (154) qui, saillant de la plaque (38), dont elles sont solidaires, sont disposées parallèlement et de part et d'autre de la traverse (127) et sont munies, à chaque extrémité, d'une fente (155) enfourchant le corps de lame et dont les bords opposés constituent butées d'augmentation de la raideur de la lame.

EP 0 443 968 A1

FIG.1

FIG.2

10

EP 0 443 968 A1

FIG.3

FIG.4    FIG.5    FIG.6

11

FIG.7

FIG.8

FIG.9

FIG.10

FIG.11

FIG.12

13

FIG.13

124
121
155
154
123
153
152a
34
38
152
36
127
154
28
121
124

FIG.14

38
126
121
123
154
152
127
28
153
41

FIG.15

126
122
154
123
155
127
28
38

FIG.16

38
153
152a
154
127
28
153

14

Office européen
des brevets

RAPPORT DE RECHERCHE EUROPEENNE

Numero de la demande

EP 91 42 0058

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 275 285 (NATIONAL AERONAUTICS AND SPACE ADMINISTRATION) * revendications 1-6 * | 1 | G 01 B 21/04 B 25 J 13/00 G 05 G 9/00 G 01 B 7/00 |
| A | WO-A-8 601 597 (M.I.T.) * pages 5-11 * | 1 | |
| A | EP-A-0 023 864 (ASSOCIATION DES OUVRIERS EN INSTRUMENTS DE PRECISION) * pages 5-13 * | 1-10 | |
| A | INTERNATIONAL CONFERENCE ON ROBOTICS AND AUTOMATION vol. 1, 1989, pages 249-255, Washington, US; T. YOSHIKAWA et al.: "A 6-Axis Force Sensor with 3-Dimensional Cross-Shape-Structure" * paragraphe 2 * | 1 | |
| A | US-A-4 621 533 (S.S. GINDY) * colonnes 9,10; figure 7 * | 1 | |
| A | EP-A-0 162 565 (FUJI ELECTRIC CORPORATE RESEARCH AND DEVELOPMENT LTD.) * page 31, lignes 32-35; page 32, lignes 1-9; figures 15a-c * | 1 | DOMAINES TECHNIQUES RECHERCHES (Int. Cl.5) B 25 J 1/00 B 25 J 13/00 G 01 B 5/00 G 01 B 7/00 G 01 B 21/00 G 01 L 1/00 G 05 G 1/00 G 05 G 7/00 G 05 G 9/00 |

Le présent rapport a été établi pour toutes les revendications

| Lieu de la recherche | Date d'achèvement de la recherche | Examinateur |
|---|---|---|
| BERLIN | 28-05-1991 | DIETRICH A. |